# EUROPEAN PATENT APPLICATION

(11) **EP 2 692 941 A1**
(43) Date of publication of application: **05.02.2014**
(21) Application number: 12178905.1
(22) Date of filing: 01.08.2012
(51) Int. Cl.: D06P 1/613, D06P 1/651, G02B 1/10, G02C 7/10

(54) **Composition and process for tinting organic glass**

(71) Applicant: Breton, François, 69540 Irigny (FR); Blackice, 69620 Bagnols (FR)
(72) Inventor: Breton, François, 69540 Irigny (FR)
(74) Representative: Icosa

(57) **Abstract**

The invention relates to a composition and a process for tinting glass, preferably organic glass. Especially, the present invention relates to a composition comprising a polyalkylene glycol derivative (II) and a compound of formula (I) 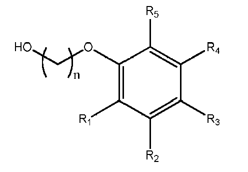 wherein
n is an integer an is ranging from 1 to 6, preferably is equal to 1, 2, 3, 4, 5 or 6, more preferably is equal to 2;
R1, R2, R3, R4 and R5 are each independently selected from the group of substituent comprising hydrogen atoms, halogen atoms, C1-4 alkyl preferably methyl or ethyl, C1-4 alkoxy preferably methoxy or ethoxy, hydroxyl, -O-(CH₂)ₙ-OH wherein n is as described above; preferably R1, R2, R4 and R5 are hydrogen atoms and R3 is -O-(CH₂)ₙ-OH.

The invention further relates to a lacquer for tinted glass comprising at least one hydrolyzed alkoxy silane, an adhesion promoting agent, a blocked isocyanate and a solvent.

## Description

### FIELD OF INVENTION

The present invention relates to the field of tinting of glasses. Especially, the invention relates to a composition and a process for tinting glass, preferably organic glass. The invention further relates to a lacquer to protect tinted glass.

In the meaning of this invention, the term "glass" means an optical organic material, especially lenses; ophthalmic elements fitting for spectacles, eyeglasses, sunglasses; screens such as for example cockpit screens; goggles; helmet visors or the like.

### BACKGROUND OF INVENTION

Manufacturers have encountered numerous technical challenges when manufacturing tinted glasses.

Known techniques of tinting in the mass of the molten glass provide limited flexibility in the range of colors that can be offered and prior art techniques may lead to glasses where the transmittance is non-uniform.

Another prior art process consists in dipping glasses into a hot, liquid dye solution. The dyes enter into the resin, thus resulting in tinting the lens.

Tinting of glasses is traditionally operated by dipping in tinting baths. The traditional process currently used to tint organic glasses comprises the following steps:
- dipping the glass in a tinting bath at elevated temperature, usually more than 90°C,
- rinsing the tinted glass with water at ambient temperature,
- evaluating the tint,
- optionally further dipping several times the glass in tinting baths to obtain desired tint and rinsing after each immersion,
- applying specific coatings such as protective coatings, anti-reflection coatings or anti-scratching coatings.

In some processes, the glass is first dipped in a solvent bath in order to swell the polymeric material, opening its pores.

Methods of tinting by dipping used to date present the following drawbacks:
- a very long dipping time is necessary to tint the glass - for example about 1 hour for a C tint;
- a bad rinsing of the glass is often observed;
- when the glass has to be dipped several times in tinting baths, spots may appear;
- some compounds present in the tinting bath are toxic;
- tinting baths have a unpleasant odor;
- temperatures used to proceed to the tinting may cause degradation of the glass, especially in the case of 1.67 glasses;
- a bad uniformity of the tint on the glass is often noted together with edge effects;
- this technics shows a poor tint reproducibility;
- the tint may also be instable overtime.

Therefore, new tinting methods and compositions are needed in order to overcome above difficulties, to improve the efficiency of the coloration and obtain better results.

The present invention thus relates to a composition and a process to improve the efficiency of tinting baths, to control the composition of the bath overtime by addition of a composition and to protect the tint afterwards.

It has been surprisingly found by the applicant that adding a phenoxy-alcohol derivative and a polyalkylene glycol derivative in the tinting bath improves the efficiency of the tinting of the glass.

Without willing to be linked by any theory, it is the Applicant understanding that the hydrophilic arm of the phenoxy-alcohol derivative allows the dye to penetrate in the pores of the glasses. This is especially efficient in the case of high index glasses wherein the glass is highly reticulated.

Moreover, the use of polyalkylene glycol derivative during the coloration provides tinted glasses having a perfect uniformity of coloration, with no problem of retinting since edge effects are avoided. Without whiling to be bound by a theory, it is the Applicant's understanding that the viscosity of the polyalkylene glycol derivative increases the viscosity of the tinting bath and allows the homogenization of the bath.

Therefore, the invention relates to a composition comprising a phenoxy-alcohol derivative and a polyalkylene glycol derivative that may be used in traditional tinting baths in order to improve tinting of glasses. The invention also relates to a process comprising the use of the composition of the invention for tinting glasses.

The tinting process of the invention presents the advantage to have duration that is very short compared to currently used processes. Indeed, a C tint may be obtained in about 15 minutes for a grey tint and in about 30 minutes for a yellow-brawn, whereas it takes usually more than 1 hour.

The Applicant also showed that it is possible to increase the duration of use of the tinting bath by adding regularly therein controlled volumes of a composition comprising optimized concentrations of the different components used for coloration. Especially, the composition of the invention allows extending the duration of use of the tinting bath for about 2 weeks whereas it is usually necessary to completely change the tinting bath after one weeks of use.

The Applicant surprisingly showed that the composition and the process of the present invention are particularly well adapted to the tinting of glasses with high refractive index.

The refractive index of a glass is generally specified with respect to the yellow He-d Fraunhofer line, noted n_{d}. Lens materials are classified by their refractive index:
- normal index: 1.48 ≤ n_{d} < 1.54,
- mid index: 1.54 ≤ n_{d} < 1.60,
- high index: 1.60 ≤ n_{d} < 1.74,
- very high index: 1.74 ≤ n_{d}.

The refractive index of some commonly used organic glasses is summarized in the table below:

| **Material** | **Refractive Index** |
|---|---|
| CR-39 | 1.49 |
| Trivex | 1.53 |
| Polycarbonate | 1.59 |
| MR-6 | 1.60 |
| MR-8 | 1.61 |
| MR-20 | 1.61 |
| MR-7 | 1.67 |
| MR-10 | 1.67 |
| Hoya EYRY | 1.70 |
| MR-74 | 1.74 |
| Tokai | 1.76 |

There is currently an increasing use of high refractive index glasses, especially for corrective lenses. High-index glasses enables providing thinner and sometime lighter lenses. Moreover, it allows improving UV protection compared to classical CR39 and glass lenses.

Providing tinted high-index lenses is expected but difficulties have been encountered while trying to tint high refractive index glasses with known tinting methods. Indeed, in high-index glasses, the glass is more reticulate and the color cannot easily enter in the network.

Tinting of normal or mid index organic glasses may also be difficult. In some cases, such as for Trivex glass, the surface of the glass should first be coated with a non-tintable varnish and then coated with a tintable varnish before tinting. If these two layers of varnish are not employed, defaults present in the Trivex glass become apparent and prevent the use of the tinted glass. In other cases, processes used to tint organic glasses do not allow to obtain a dark color. This is especially the case for MR8 polythiourethane glasses.

The Applicant showed that the new composition of the present invention allows solving above difficulties and enables tinting a wide variety of organic glasses, especially the one having high refractive index.

Another advantage of the composition of the present invention is that a wide variety of colors may be used to tint glasses, such as gray, yellow/orange, green, amber/brown, rose/red or blue.

A further object of the present invention is a lacquer that may be used with tinted glasses.

### SUMMARY

The present invention relates to a composition comprising:
- a compound of formula (I) 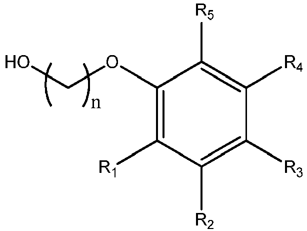 wherein
   n is an integer an is ranging from 1 to 6, preferably is equal to 1, 2, 3, 4, 5 or 6, more preferably is equal to 2;
   R1, R2, R3, R4 and R5 are each independently selected from the group of substituent comprising hydrogen atoms, halogen atoms, C1-4 alkyl preferably methyl or ethyl, C1-4 alkoxy preferably methoxy or ethoxy, hydroxyl, -O-(CH₂)ₙ-OH wherein n is as described above; preferably R1, R2, R4 and R5 are hydrogen atoms and R3 is -O-(CH₂)ₙ-OH;
   and
- a polyalkylene glycol derivative of formula (II) 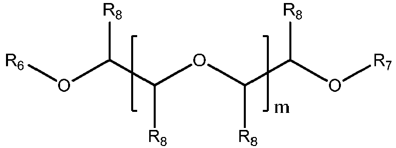 wherein
   m is an integer an is ranging from 0 to 6, preferably is equal to 0, 1, 2, 3, 4, 5 or 6, more preferably m is equal to 1;
   R6 and R7 are each independently selected from the group of substituent comprising hydrogen atoms, methyl and ethyl, preferably R6 and R7 are both hydrogen atoms;
   R8 is a hydrogen atom or a methyl.

According to one embodiment, the compound of formula (I) is phenoxy-2-ethanol and the polyalkylene glycol derivative of formula (II) is diethylene glycol.

According to one embodiment, the concentration of compound of formula (I) in the composition of the present invention is ranging from 0.1% to 80% in weight of the total weight of the composition, preferably from 0.5% to 75%.

According to one embodiment, the concentration of polyalkylene glycol derivative (II)1 in the composition of the present invention is ranging from 0.1% to 80% in weight of the total weight of the composition, preferably from 0.1% to 60%.

According to one embodiment, the composition of the invention comprises a compound of formula (I) at a concentration ranging from 30% to 60% in weight of the total weight of the composition, preferably from 45% to 55%, more preferably about 50% and polyalkylene glycol derivative (II) at a concentration ranging from 30% to 60%, preferably from 45% to 55%, more preferably about 50%.

According to one embodiment, the composition of the invention comprises a compound of formula (I) at a concentration ranging from 55% to 75% in weight of the total weight of the composition, preferably from 60% to 70%, more preferably from 65% to 68% and polyalkylene glycol derivative (II)at a concentration ranging from 25% to 45%, preferably from 30% to 35%, more preferably from 32% to 34%.

The present invention further relates to a process for manufacturing a tinting bath comprising the following steps:
- heating water, preferably deionized water, to at least 60°C,
- adding a composition according to the invention, under stirring, to form a solution comprising a compound of formula (I) at a concentration ranging from 0.5% to 5% in weight of the total weight of the composition, preferably from 1.5% to 2.5%, more preferably from 1.7% to 2.1% and polyalkylene glycol derivative (II)at a concentration ranging from 0.5% to 5%, preferably from 1.5 % to 2.5 %, more preferably 1.7 % to 2.1 %,
- stirring the solution for about 10 minutes while rising the temperature to about 90°C,
- adding at least a dye,
- stirring the resulting tinting bath for about 15 minutes.

According to one embodiment, the process of the invention further comprises adding to the tinting bath a volume V of a composition according to the invention, optionally a composition according to the invention diluted into water volume, wherein the volume V is the volume necessary for reaching the initial volume of the tinting bath prepared by the process of the invention.

The invention also relates to a tinting bath comprising a composition according to the invention.

According to one embodiment, the tinting bath is obtainable by the process of the invention.

The invention also relates to a process for manufacturing a tinted glass comprising dipping the glass in a tinting bath according to the invention.

The invention further relates to a kit comprising:
- at least one container comprising a composition according to the invention, and
- a container comprising a dye.

According to one embodiment, the kit of the invention comprises at least two containers comprising each independently a composition according to the invention.

The invention also relates to a tinted glass comprising a coating, said coating comprising a compound of general formula (I) 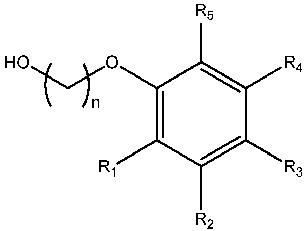 wherein
n is an integer an is ranging from 1 to 6, preferably is equal to 1, 2, 3, 4, 5 or 6, more preferably is equal to 2;
R1, R2, R3, R4 and R5 are each independently selected from the group of substituent comprising hydrogen atoms, halogen atoms, C1-4 alkyl preferably methyl or ethyl, C1-4 alkoxy preferably methoxy or ethoxy, hydroxyl, -O-(CH₂)ₙ-OH wherein n is as described above; preferably R1, R2, R4 and R5 are hydrogen atoms and R3 is -O-(CH₂)ₙ-OH.

The invention also relates to a lacquer comprising:
- at least one hydrolyzed alkoxy silane,
- a promoting agent,
- a blocked isocyanate,
- a solvent.

### DEFINITIONS

In the present invention, the following terms have the following meanings:
- **"about"** preceding a figure means plus or less 10% of the value of said figure.
- **"glass"** refers to an optical organic material, especially lenses; ophthalmic elements fitting for spectacles, eyeglasses, sunglasses; screens such as for example cockpit screens; goggles; helmet visors or the like.
- **"tinting bath"** refers to an aqueous medium containing at least one dye and at least one surfactant, wherein the dye is dispersed within the medium. The surfactant may be for example sodium lauryl sulfate, sodium lauryl ether sulfate (Laureth), alkyl quaternary ammonium such as for example benzalkonium chloride.
- **"prolongation of a tinting bath"** refers to the addition of at least one component initially present in the tinting bath, into said tinting bath during its use in order to compensate (1) the evaporation of said component and (2) the consumption of said component.
- **"dye"** refers to a pure primary color, in the form of a powder, preferably coated with components such as for example naphthalene in order to avoid agglomeration of the powder. In a preferred embodiment, dyes used in the present invention are dispersed dyes.
- **"tinted glass"** or **tinted lens"** refers to glass or lens, being totally or partially tinted, having a transmission index less than the corresponding non-tinted glass or lens.
- **"coating"** refers to a protective composition, in the form of a liquid, generally applied by spin coating or dipping, and which is suitable for hard coating, for example for abrasion resistance. Coating that may be applied on glass are for example protective coatings, anti-reflection coating, anti-scratching coatings. The **"lacquer"** of the invention is a specific coating.
- **"promoting agent"** refers to adhesion promoting agent designed to impart or enhance adhesion between substrate and abrasion resistant layer.
- **"C1-4 alkyl"** refers to any saturated linear or branched hydrocarbon chain, with 1, 2, 3 or 4 carbon atoms, preferably methyl, ethyl, propyl, isopropyl, n-butyl, sec-butyl, isobutyl and tert-butyl.
- **"C1-4 alkoxy"** refers to a O-alkyl group wherein the alkyl group is a C1-4 alkyl.

### DETAILED DESCRIPTION

The present invention applies to organic glasses, such as for example CR-39, MR6, MR7, MR8, MR10, MR20, MR74, Trivex (polyurethane), polycarbonate, high-index plastic (thiourethanes), trogamid (nylon 12), grilamid (nylon 4.12), polysulfones.

### Composition

The present invention relates to a composition comprising:
- a compound of formula (I) 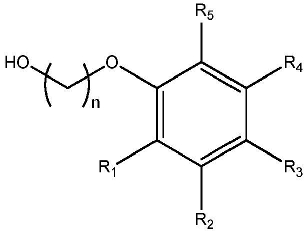 wherein
   n is an integer an is ranging from 1 to 6, preferably is equal to 1, 2, 3, 4, 5 or 6, more preferably is equal to 2;
   R1, R2, R3, R4 and R5 are each independently selected from the group of substituent comprising hydrogen atoms, halogen atoms, C1-4 alkyl preferably methyl or ethyl, C1-4 alkoxy preferably methoxy or ethoxy, hydroxyl, -O-(CH₂)ₙ-OH wherein n is as described above; preferably R1, R2, R4 and R5 are hydrogen atoms and R3 is -O-(CH₂)ₙ-OH;
   and
- a polyalkylene glycol derivative of formula (II) 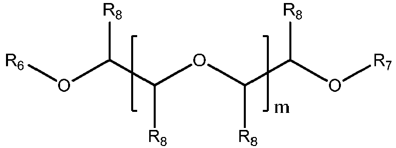 wherein
   m is an integer an is ranging from 0 to 6, preferably is equal to 0, 1, 2, 3, 4, 5 or 6, more preferably m is equal to 1;
   R6 and R7 are each independently selected from the group of substituent comprising hydrogen atoms, methyl and ethyl, preferably R6 and R7 are both hydrogen atoms;
   R8 is a hydrogen atom or a methyl.

According to a preferred embodiment, R1, R2, R4 and R5 are H and R3 is -O-(CH₂)ₙ-OH wherein n is as described above.

According to a preferred embodiment, the compound of formula (I) is phenoxy-2-ethanol.

According to a preferred embodiment, the polyalkylene glycol derivative of formula (II) is diethylene glycol.

According to another preferred embodiment, the polyalkylene glycol derivative of formula (II) is dipropylene glycol.

According to one embodiment, the concentration of compound of formula (I) in the composition of the present invention is ranging from 0.1% to 80% in weight of the total weight of the composition, preferably from 0.5% to 75%.

According to one embodiment, the concentration of polyalkylene glycol derivative (II) in the composition of the present invention is ranging from 0.1% to 80% in weight of the total weight of the composition, preferably from 0.1% to 60%.

### Composition A

In a first embodiment, the composition of the invention comprises a compound of formula (I) at a concentration ranging from 30% to 60% in weight of the total weight of the composition, preferably from 45% to 55%, more preferably about 50% and polyalkylene glycol derivative (II)at a concentration ranging from 30% to 60%, preferably from 45% to 55%, more preferably about 50%. The composition according to this first embodiment is referred thereafter as composition A.

In an embodiment, the ratio of the concentrations in weight of compound of formula (I) to the polyalkylene glycol derivative (II) in composition A is ranging from 40:60 to 60:40, preferably is equal to 1:1.

In a specific embodiment, the composition A of the invention consists of 20g of phenoxy-2-ethanol and 20g of polyalkylene glycol derivative (II).

In an embodiment, the ratio of the concentrations in weight of compound of formula (I) to the polyalkylene glycol derivative (II) in composition A is ranging from 40:60 to 50:50. In this specific embodiment, composition A may be used as tint neutralizer to discolor partially or totally tinted glass.

### Composition B

In a second embodiment, the composition of the comprises a compound of formula (I) at a concentration ranging from 55% to 75% in weight of the total weight of the composition, preferably from 60% to 70%, more preferably from 65% to 68% and polyalkylene glycol derivative (II) at a concentration ranging from 25% to 45%, preferably from 30% to 35%, more preferably from 32% to 34%. The composition according to this second embodiment is referred thereafter as composition B.

In an embodiment, the ratio of the concentrations in weight of the compound of formula (I) to the polyalkylene glycol derivative (II) in composition B is ranging from 2.5:1 to 1.5:1, preferably is equal to 2:1.

In a specific embodiment, composition B is used to prolong a tinting bath comprising composition A of the invention. In this case, the ratio of the concentrations in weight of the compound of formula (I) to the polyalkylene glycol derivative (II) in composition B depends from
- the ratio of the concentrations in weight of the compound of formula (I) to the polyalkylene glycol derivative (II) in composition A; and
- from the evaporation rate of compound of formula (I) to the polyalkylene glycol derivative (II).

In a specific embodiment, the composition B of the invention consists of 50g of phenoxy-2-ethanol and 25g of diethylene glycol.

### Composition C

In a third embodiment, the composition of the invention comprises a compound of formula (I) at a concentration ranging from 0.5% to 1.5% in weight of the total weight of the composition, preferably from 0.7% to 1.2%, more preferably from 0.9% to 1.1% and polyalkylene glycol derivative (II) at a concentration ranging from 0.1% to 0.7%, preferably from 0.2% to 0.6%, more preferably from 0.3% to 0.5%. The composition according to this third embodiment is referred thereafter as composition c.

In an embodiment, the ratio of the concentrations in weight of the compound of formula (I) to the polyalkylene glycol derivative (II) in composition C is ranging from 2.5:1 to 1.5:1, preferably is equal to 2:1.

Composition C may be obtained by dilution with water, preferably deionized water, of composition B. according the above second embodiment.

In a specific embodiment, the composition C of the invention consists of 50g of phenoxy-2-ethanol, 25g of diethylene glycol and 5 L of demineralized water.

### Tinting bath

The present invention further relates to a tinting bath.

In an embodiment, the tinting bath of the invention comprises:
- a compound of formula (I) as described above,
- a polyalkylene glycol derivative (II) as described above,
- at least one dye, and
- water.

In a preferred embodiment, the tinting bath of the invention comprises:
- a compound of formula (I) at a concentration ranging from 0.5% to 5% in weight of the total weight of the composition, preferably from 1.5% to 2.5%, more preferably from 1.7% to 2.1%,
- a polyalkylene glycol derivative (II) at a concentration ranging from 0.5% to 5%, preferably from 1.5% to 2.5 %, more preferably 1.7% to 2.1 %,
- at least one dye, and
- water.

In an embodiment, the ratio of the concentrations in weight of the compound of formula (I) to the polyalkylene glycol derivative (II) in the tinting bath of the invention is ranging from 40:60 to 60:40, preferably is equal to 1:1.

In one embodiment, the dye is selected from the group comprising Dianix AC-E from DyStar®, dispersed dyes from Cibacet® or Teratop®, dispersed dyes from BASF, Foron® from Clariant or a mixture thereof. Preferably, the dye is a dispersed dye.

According to a specific embodiment, the tinting bath of the invention comprises 1 L of deionized water, 20g of phenoxy-2-ethanol, 20g of diethylene glycol and at least one dye.

According to an embodiment, the tinting bath of the invention further comprises a surfactant such as for example sodium lauryl sulfate, sodium lauryl ether sulfate (Laureth), alkyl quaternary ammonium such as for example benzalkonium chloride or a mixture thereof.

### Kit

The present invention also relates to a kit for glass tinting comprising:
- at least one container comprising a composition according to the invention and
- a container comprising a dye.

In one embodiment, the dye is selected from the group comprising Dianix AC-E from DyStar®, dispersed dyes from Cibacet® or Teratop®, dispersed dyes from BASF, Foron® from Clariant or a mixture thereof. Preferably, the dye is a dispersed dye.

In a preferred embodiment, the at least one container of the kit of the invention contains a composition comprising a compound of formula (I) at a concentration ranging from 30% to 60% in weight of the total weight of the composition, preferably from 45% to 55%, more preferably about 50% and polyalkylene glycol derivative (II)at a concentration ranging from 30% to 60%, preferably from 45% to 55%, more preferably about 50% (composition A). In this embodiment, compound (I) is preferably phenoxy-2-ethanol.

In an embodiment, the kit of the invention comprises at least two containers comprising each independently a composition according to the invention.

In a preferred embodiment, the kit of the invention comprises:
- a container containing a composition comprising a compound of formula (I) at a concentration ranging from 30% to 60% in weight of the total weight of the composition, preferably from 45% to 55%, more preferably about 50% and polyalkylene glycol derivative (II)at a concentration ranging from 30% to 60%, preferably from 45% to 55%, more preferably about 50% (composition A);
- a container containing a composition comprising a compound of formula (I) at a concentration ranging from 55% to 75% in weight of the total weight of the composition, preferably from 60% to 70%, more preferably from 65% to 68% and polyalkylene glycol derivative (II)at a concentration ranging from 25% to 45%, preferably from 30% to 35%, more preferably from 32% to 34% (composition B);
- a container comprising a dye.

In an embodiment, the kit of the invention further comprises a container comprising the lacquer of the invention.

In a preferred embodiment, the kit of the invention comprises:
- a container containing 20g of phenoxyethanol and 20 g of diethylene glycol and
- a container comprising a dye.

In a preferred embodiment, the kit of the invention comprises:
- a container containing 20g of phenoxyethanol and 20 g of diethylene glycol and
- a container containing 50 g of phenoxyethanol and 25 g of diethylene glycol, and
- a container comprising a dye.

### Process

### Manufacturing of a tinting bath

The present invention also relates to a process for manufacturing a tinting bath comprising the following steps:
- heating water to at least 60°C,
- adding a composition according to the invention, preferably composition A, under stirring, to form a solution comprising a compound of formula (I) at a concentration ranging from 0.5% to 5% in weight of the total weight of the composition, preferably from 1.5% to 2.5%, more preferably from 1.7% to 2.1 % and polyalkylene glycol derivative (II) at a concentration ranging from 0.5% to 5%, preferably from 1.5% to 2.5%, more preferably 1.7% to 2.1%,
- stirring the solution for about 10 minutes while rising the temperature to about 90°C,
- adding at least a dye,
- stirring the resulting tinting bath for about 15.

The present invention further relates to a tinting bath obtainable by the process for manufacturing a tinting bath according to the invention.

According to one embodiment, water used in the tinting bath is preferably deionized water.

According to one embodiment, the dye is selected from the group comprising Dianix AC-E from éDyStar®, dispersed dyes from Cibacet® or Teratop®, dispersed dyes from BASF, Foron® from Clariant or a mixture thereof. Preferably, the dye is a dispersed dye.

In one embodiment, heating of the solution is preferably performed using an oil bath, preferably a glycerin bath, in order to homogeneously heat the tinting bath.

### Prolongation of a tinting bath

According to one embodiment, the process of the invention further comprises a subsequent step of prolongation of the tinting bath. In this embodiment, a volume V of a composition according to the invention, preferably composition C, is added to the tinting bath, wherein the volume V is the volume necessary for reaching the initial volume of the tinting bath prepared by the process of the invention.

In one embodiment, the composition of the invention added to prolong the tinting bath comprises a compound of formula (I) at a concentration ranging from 0.5% to 1.5% in weight of the total weight of the composition, preferably from 0.7% to 1.2%, more preferably from 0.9% to 1.1% and polyalkylene glycol derivative (II)at a concentration ranging from 0.1% to 0.7%, preferably from 0.2% to 0.6%, more preferably from 0.3% to 0.5% (composition C).

In one embodiment, the composition added to prolong the tinting bath is a composition according the invention diluted into water.

In one embodiment, the process of the invention further comprises a step of preparation of a diluted composition, comprising the following steps:
- diluting
   o a composition of the invention, preferably a composition comprising a compound of formula (I) at a concentration ranging from 55% to 75% in weight of the total weight of the composition, preferably from 60% to 70%, more preferably from 65% to 68% and polyalkylene glycol derivative (II) at a concentration ranging from 25% to 45%, preferably from 30% to 35%, more preferably from 32% to 34% (composition B),
   o with water, preferably deionized water,
   o to form a diluted solution comprising a compound of formula (I) at a concentration ranging from 0.5% to 1.5% in weight of the total weight of the composition, preferably from 0.7% to 1.2%, more preferably from 0.9% to 1.1% and polyalkylene glycol derivative (II)at a concentration ranging from 0.1% to 0.7%, preferably from 0.2% to 0.6%, more preferably from 0.3% to 0.5% (composition C);
- homogenizing the diluted composition by stirring.

According to one embodiment, the composition used to prolong the tinting bath of the invention may further comprise a dye. In this embodiment, the dye may be the same than the at least one dye present in the tinting bath.

According to one embodiment, the concentration of the compounds comprised in the composition C, especially the concentration in compound (I), in polyalkylene glycol derivative (II) and optionally in dye, is determined by taking into account the temperature of the tinting bath and the temperature of ebullition of the compounds.

### Manufacturing a tinted glass

The present invention further relates to a process for manufacturing a tinted glass comprising dipping the glass in a tinting bath according to the invention.

In one embodiment, the process of manufacturing a tinted glass of the invention further comprises a subsequent step of rinsing the tinted glass in water, preferably deionized water.

According to one embodiment, the glass is cleaned before tinting in order to avoid defects on its surface after tinting. In one embodiment, cleaning is performed using acetone, ethanol or methanol. In an embodiment, cleaning is performed manually. In another embodiment, cleaning is performed using ultrasounds in order to avoid manipulation.

According to an embodiment the dipping of the glass in the tinting bath is performed for a period of time ranging from 1 second to 1 hour, preferably from 5 minutes to 20 minutes. The duration of the immersion may depend from the refractive index of the glass and/or of the kind of tint that is expected. According to one embodiment, the dipping of the glass in the tinting bath is performed so that tinted glass has an absorption ranging from 10% to 97%, preferably from 60% to 80%, more preferably about 70%. In a preferred embodiment, the absorption of the tinted glass is less than 97%.

In one embodiment, a C tint is expected and the duration of the dipping of the glass in the tinting bath is ranging from 5 to 45 min, preferably from 10 to 30 min. The process of the invention presents therefore the advantage to necessitate a shorter period of time to tint than current processes.

According to one embodiment the tinting bath is stirred during the tinting of the glass and/or the glass is moved in the tinting tank during the tinting in order to obtain a good dispersion of the dye and a uniform coloration.

According to one embodiment, the tinting tank is made of stainless steel or PYREX glass.

### Tinted glasses

The present invention relates to tinted glasses comprising a coating, said coating comprising a compound of formula (I) 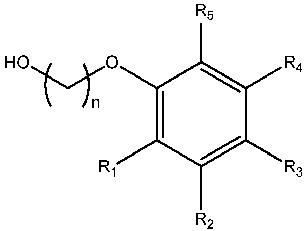 wherein
n is an integer an is ranging from 1 to 6, preferably is equal to 1, 2, 3, 4, 5 or 6, more preferably is equal to 2;
R1, R2, R3, R4 and R5 are each independently selected from the group of substituent comprising hydrogen atoms, halogen atoms, C1-4 alkyl preferably methyl or ethyl, C1-4 alkoxy preferably methoxy or ethoxy, hydroxyl, -O-(CH₂)ₙ-OH wherein n is as described above; preferably R1, R2, R4 and R5 are hydrogen atoms and R3 is -O-(CH₂)ₙ-OH.

According to an embodiment, the coating of the tinted glass of the invention further comprises a polyalkylene glycol derivative of formula (II) 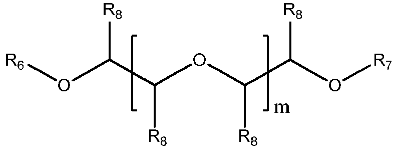 wherein
m is an integer an is ranging from 0 to 6, preferably is equal to 0, 1, 2, 3, 4, 5 or 6, more preferably m is equal to 1;
R6 and R7 are each independently selected from the group of substituent comprising hydrogen atoms, methyl and ethyl, preferably R6 and R7 are both hydrogen atoms;
R8 is a hydrogen atom or a methyl.

According to one embodiment, the tinted glass of the invention is obtainable by the process of manufacturing tinted glass according to the invention.

In one embodiment, tinted glasses of the invention may further comprise a coating, said coating being selected from the lacquer of the invention, a protective coating, an anti-reflection coating or an anti-scratching coating.

According to one embodiment, the coating is applied on the tinted glass using a method known by one skilled in the art.

In a specific embodiment, the tinted glass of the invention is coated with the lacquer of the invention.

According to an embodiment, glasses that may be tinted according to the present invention comprise organic glass, especially high refractive index glass, CR39, MR6, MR7, MR8, MR10, MR20, MR74, Trivex (polyurethane), polycarbonate, high-index plastic (thiourethanes), trogamid (nylon 12), grilamid (nylon 4.12), polysulfones.

In one embodiment, glass that may be tinted according to the present invention may be a glass preliminary coated with the lacquer of the invention.

In an embodiment, tinted glasses according to the present invention are used as corrective lens, solar lens, screens for plane cockpits, helmet visors and the like.

### Lacquer

Different coatings may be used with tinted glasses, such as for example, protective coatings, tintable coatings, anti-fogging coatings, anti-scratching coatings or a combination thereof.

Depending from the type of glass that is tinted, the coating may be applied before and/or after tinting.

Applying a coating after tinting may enable fixing the color. However, when the coating is applied after tinting, a discoloration of the glass may occur due to the presence of solvents in the coating, especially methanol. Moreover, for some glasses such as grilamid, it is not possible to fix the color when applying a coating.

Therefore, there exists a need for a varnish that does not lead to the discoloration of the tinted glass and that enable fixing the color.

When the coating is applied before tinting, it has to be tintable. Once the tintable coating has been applied on the glass, the glass may be colored by a usual method such as dipping in a tinting bath. A second coating has then to be applied to fix and to protect the coloration.

A drawback of tintable coatings is that all intensities of colors cannot be obtained, especially dark colors. Moreover, a very long time of coloration is often needed to obtain intermediates intensities.

Therefore, there is a need for a tintable coatings that allows to obtain dark colors and that limit the duration of the coloration.

The present invention thus relates to a coating, thereafter referred to as a lacquer, which solves above problems. The lacquer of the invention comprises:
- at least one hydrolyzed alkoxy silane,
- an adhesion promoting agent,
- a blocked isocyanate,
- a solvent.

In an embodiment, the lacquer of the invention is free of methanol.

According to one embodiment, the hydrolyzed alkoxy silane may be obtained by the hydrolysis of polysiloxanes such as for example phenyltriethoxysilane (PTES), methyltriethoxysilane (MTES), bistriethoxysilylethane (BSE), glycidoxypropyl trimethoxysilane (Glymo) or a mixture thereof.

According to one embodiment, the adhesion promoting agent may be for example a tetrahydroxylated polycopolactone, for example CAPA® 4101 from Perstorp or Joncryl® 587 from BASF.

According to one embodiment, the blocked isocyanate may be for example Desmodur® LS2253 or Desmodur® 3575 from Bayer or a mixture thereof.

According to one embodiment, the solvent may be for example a secondary alcohol such as for example 1-methoxy-2-propanol; water; ethanol or a mixture thereof.

In one embodiment, the lacquer of the invention further comprises a UV stabilizer, preferably a benzotriazole such as for example Tinuvin 765.

In one embodiment, the lacquer of the invention further comprises a base, preferably 1,8-diazabicyclo[5.4.0]undec-7-ene (DBU).

In one embodiment, the lacquer of the invention further comprises a surfactant, preferably Byk® 306 from Byk.

In one embodiment, the lacquer of the invention further comprises a dye such as for example a blue dye, preferably a blue solvent dye, i.e. a blue dye soluble in alcohol.

According to one embodiment, the lacquer of the invention comprises an amount of hydrolyzed alkoxy silane ranging from 40% to 55% in weight to the total weight of the lacquer, preferably from 45% to 50%.

According to one embodiment, the lacquer of the invention comprises an amount of adhesion promoting agent ranging from 1% to 15% in weight to the total weight of the lacquer, preferably from 2% to 10%, more preferably from 3% to 4%.

According to one embodiment, the lacquer of the invention comprises an amount of blocked isocyanate ranging from 0.1% to 0.5% in weight to the total weight of the lacquer, preferably from 0.15% to 0.25%.

The invention further relates to a process for manufacturing a tinted lacquered glass comprising the following steps:
- coating the lacquer of the invention on a glass,
- tinting the lacquered glass by dipping in a tinting bath, preferably in a tinting bath according to the invention,
- optionally applying on the tinted lacquered glass a coating such as a protective coating, an anti-reflection coating, an anti-scratching coating, a lacquer of the invention.

The invention further relates to an alternative process for manufacturing a tinted lacquered glass comprising the following steps:
- tinting a glass by dipping in a tinting bath, preferably in a tinting bath according to the invention.
- coating the lacquer of the invention on the tinted glass,
- optionally applying on the tinted lacquered glass a coating such as a protective coating, an anti-reflection coating or an anti-scratching coating.

It was surprisingly found by the Applicant that when the lacquer of the invention is applied before tinting and when the composition of the invention is used in the tinting bath, then, dark colors may be obtained in a short time.

It was also show by the applicant that the lacquer of the invention does not lead to the discoloration of the glass when applied after tinting. Without willing to be bound by any theory, it is the Applicant understanding that the discoloration is avoided in the present invention since dyes penetrate more deeply in the glass when using the composition of the invention in the tinting.

It was further found by the Applicant the lacquer of the invention presents the following advantages:
- the lacquer of the invention protects tinted glasses during further coating steps, the lacquer of the invention increases the shelf-life of the coloration on tinted glasses.

### BRIEF DESCRIPTION OF THE DRAWINGS

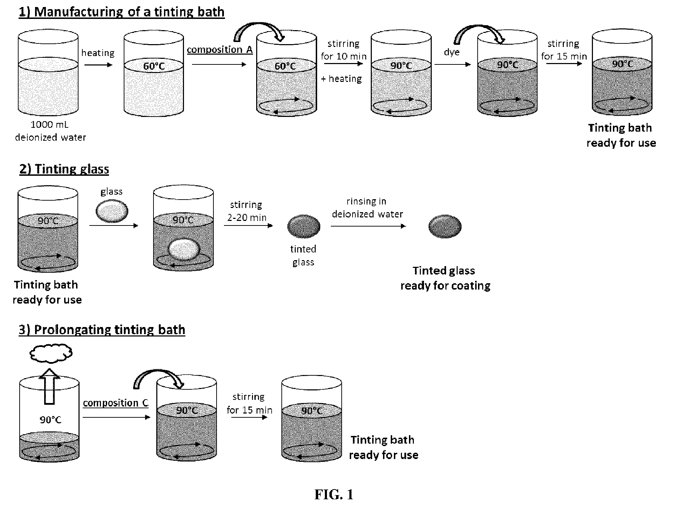

**Figure 1** is a graph showing the tinting process of the invention, comprising a step of preparing the tinting bath, a step of tinting and a step of bath prolongation.

### EXAMPLES

The present invention is further illustrated by the following examples.

### Example 1: Compositions

| **n° composition** | **1** | **2** | **3** | **4** |
|---|---|---|---|---|
| **Phenoxy-2-ethanol** | 20g | 50g | 20g | 50g |
| **Diethylene glycol** | 20g | 25g | \ | \ |
| **Triethylene glycol** | \ | \ | 20g | 25g |

Compositions **1** and **2** were obtained by mixing the two components.

### Example 2: Manufacturing a tinting bath

A tinting bath according to the invention was prepared by:
- heating a 1000 mL of water to 60°C,
- adding under stirring composition **1** of example 1,
- stirring the solution for about 10 minutes while rising the temperature to about 90°C,
- adding a dye to obtain a grey tinting bath (using a mixture of AC-E dyes from DyStar®: 1.52 g of bleue dye, 0.44g of red dye and 1.04g of yellow dye),
- stirring the resulting solution for about 15 minutes to homogenize the bath.

The tinting bath is maintained at a temperature of about 90°C and may then be used to tint glasses.

This process is represented on the first line of the scheme of FIG 1.

### Example 3: Manufacturing a tinted glass: grey-tinted CR39® lens

The process for glass tinting is represented on the second line of the scheme of FIG 1.

A lens made of CR39® is dipped into the tinting bath prepared in example 2 for a period of time of about 5 min. The tinted lens is then rinsed for 1 minute in deionized water and may then be coated.

Transmission is reduced down to 10% with perfectly homogeneous color.

### Example 4: Manufacturing a tinted high index optical lens: grey-tinted MR-8 lens

The process for glass tinting is represented on the second line of the scheme of FIG 1.

A lens made of MR-8 is dipped into the tinting bath prepared in example 2 for a period of time of about 15 min. The tinted lens is then rinsed for 1 minute in deionized water and may then be coated.

Transmission is reduced down to 10% with perfectly homogeneous color.

### Example 5: Bath prolongation

During use at 90°C, a part of the tinting bath evaporates. In order increase the duration of use of the tinting bath, a volume of prolongation composition may be added therein, preferably a composition C according to the invention. The process of bath prolongation is represented on the third line of FIG 1.

Composition **2** of example 1 is first diluted in 5000mL of deionized water. A volume of this prolongation solution is added in the evaporating tinting bath to reach the initial volume of the bath. This level adjustment is performed regularly during the use of the bath to maintain the composition of the bath.

### Example 6: Lacquer

### Lacquer 1:

| **Component** | **Role** | **Amount (g)** | **Supplier** |
|---|---|---|---|
| MTES | polysiloxane | 362.81 | Evonik |
| PTES | polysiloxane | 366.77 | Gelest |
| BSE | polysiloxane | 305.43 | Gelest |
| Acetic acid | acid | 56.86 | Aldrich |
| deionized water | for hydrolysis | 330.93 | \ |
| 1-methoxy-2-propanol | solvent | 556.49 | Dow |
| Glymo | polysiloxane | 181.86 | Momentive |
| Water | for hydrolysis | 54.46 | \ |
| DBU | base | 2.24 | Aldrich |
| Desmodur® 3575 | blocked isocyanate | 5.76 | Bayer |
| Tinuvin 765 | UV stabilizer | 8.64 | BASF |
| CAPA® 4101 | adhesion promoting agent | 86.70 | Perstorp |
| Byk® 306 | surfactant | 2.87 | Byk |
| 1% blue dye in iPrOH | dye | 0.86 | Bayer |
| TOTAL | \ | 2200.01 | \ |

| | | | |
|---|---|---|---|
| MTES: methyltriethoxysilane PTES: phenyltriethoxysilane BSE: bis triethoxysilylethane Glymo: glycidoxypropyl trimethoxysilane DBU: 1,8-diazabicyclo[5.4.0]undec-7-ene | | | |

The lacquer is obtained by the following process:
- Polysiloxanes MTES, PTES and BSE are hydrolyzed in hydrolyzed alkoxy silane under stirring with deionized water in presence of acetic acid for 1 night;
- 2-methoxy-2-propanol is added in the mixture as diluent and stabilizing agent;
- Glymo and water are added in the mixture and Glymo is hydrolyzed for 4 hours under stirring;
- DBU is added and the mixture is mixed under stirring for 1 night in order to obtain a partial reticulation of hydrolyzed Glymo;
- Desmodur® 3575 is added and the resulting mixture is mixed under vigorous stirring for 1 hour;
- the UV stabilized Tinuvin® 765 and the adhesion promoting agent CAPA® 4101 are added in the mixture, either at the same time or at an interval of time of about 12 hour, the resulting mixture is then stirred for 1 hour;
- the surfactant Byk® 306 and the blue dye are added and the resulting mixture is mixed under vigorous stirring for 1 hour, leading to a lacquer according to the invention ready for use.

### Example 7: Coating of a tinted glass with the lacquer of the invention

Tinted glasses prepared according to example 3 or example 4 wre coated with the lacquer of the invention prepared according to example 6:
- Activation of the tinted glass: the tinted glass is placed in a solution comprising 10% NaOH and 1% sodium gluconate for 10 min at 50-60°C under ultrasounds;
- Rinsing:
   1) the activated tinted glass is first rinsed for 3 min in water at 40°C under ultrasounds;
   2) the activated tinted glass is then rinsed for 3 min in deionized water at 40°C under ultrasounds;
- Drying: the rinsed activated tinted glass is then dryed;
- Coating: the tinted glass is dipped in the lacquer of the invention with an output speed of 3.5 mm/s;
- the lacquered tinted glass is then dryed for 7 min under infra-red;
- the lacquer is then polymerized for 2 hours in an oven at 120°C leading to a lacquered tinted glass ready for use.

The transmission of the tinted glass was measured before and after lacquering. The difference of transmission obtained for tinted glass before and after lacquering is the same as the one obtained for non-tinted glass and corresponds therefore to the lacquer layer. The coloration of the lacquered tinted glass is thus not changed compared to the coloration of the tinted glass before lacquering.

## Claims

1. A composition comprising:
- a compound of formula (I) 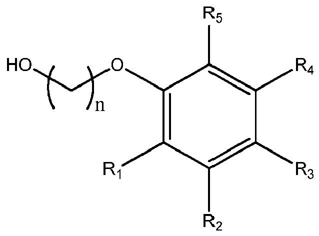 wherein
n is an integer an is ranging from 1 to 6, preferably is equal to 1, 2, 3, 4, 5 or 6, more preferably is equal to 2;
R1, R2, R3, R4 and R5 are each independently selected from the group of substituent comprising hydrogen atoms, halogen atoms, C1-4 alkyl preferably methyl or ethyl, C1-4 alkoxy preferably methoxy or ethoxy, hydroxyl, -O-(CH₂)ₙ-OH wherein n is as described above; preferably R1, R2, R4 and R5 are hydrogen atoms and R3 is -O-(CH₂)ₙ-OH;
and
- a polyalkylene glycol derivative of formula (II) 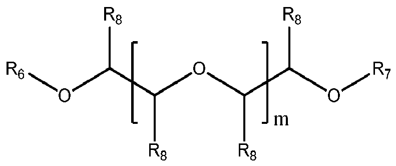 wherein
m is an integer an is ranging from 0 to 6, preferably is equal to 0, 1, 2, 3, 4, 5 or 6, more preferably m is equal to 1;
R6 and R7 are each independently selected from the group of substituent comprising hydrogen atoms, methyl and ethyl, preferably R6 and R7 are both hydrogen atoms;
R8 is a hydrogen atom or a methyl.

2. The composition according to claim **1,** wherein the compound of formula (I) is phenoxy-2-ethanol and the polyalkylene glycol derivative of formula (II) is diethylene glycol.

3. The composition according to claim **1 ,** wherein the concentration of compound of formula (I) in the composition of the present invention is ranging from 0.1% to 80% in weight of the total weight of the composition, preferably from 0.5% to 75%.

4. The composition according to anyone of claims **1** to **3,** wherein the concentration of polyalkylene glycol derivative (II)1 in the composition of the present invention is ranging from 0.1% to 80% in weight of the total weight of the composition, preferably from 0. 1% to 60%.

5. The composition according to anyone of claims **1** to **4,** comprising a compound of formula (I) at a concentration ranging from 30% to 60% in weight of the total weight of the composition, preferably from 45% to 55%, more preferably about 50% and polyalkylene glycol derivative (II)at a concentration ranging from 30% to 60%, preferably from 45% to 55%, more preferably about 50%.

6. The composition according to anyone of claims **1** to **4,** comprising compound of formula (I) at a concentration ranging from 55% to 75% in weight of the total weight of the composition, preferably from 60% to 70%, more preferably from 65% to 68% and polyalkylene glycol derivative (II)at a concentration ranging from 25% to 45%, preferably from 30% to 35%, more preferably from 32% to 34%.

7. A process for manufacturing a tinting bath comprising the following steps:
- heating water, preferably deionized water, to at least 60°C,
- adding a composition according to anyone of claims **1** to **6,** under stirring, to form a solution comprising a compound of formula (I) at a concentration ranging from 0.5% to 5% in weight of the total weight of the composition, preferably from 1.5% to 2.5%, more preferably from 1.7% to 2.1% and polyalkylene glycol derivative (II)at a concentration ranging from 0.5% to 5%, preferably from 1.5% to 2.5%, more preferably 1.7% to 2.1%,
- stirring the solution for about 10 minutes while rising the temperature to about 90°C,
- adding at least a dye,
- stirring the resulting tinting bath for about 15 minutes.

8. The process according to claim **7,** further comprising adding to the tinting bath a volume V of a composition according to anyone of claims **1** to **6,** optionally a composition according to anyone of claims **1** to **6** diluted into water volume, wherein the volume V is the volume necessary for reaching the initial volume of the tinting bath prepared by the process according to claim **7.**

9. Tinting bath comprising a composition according to anyone of claims **1** to **6.**

10. Tinting bath obtainable by the process of claim **7** or claim **8.**

11. A process for manufacturing a tinted glass comprising dipping the glass in a tinting bath according to claim **9** or claim **10.**

12. A kit comprising
- at least one container comprising a composition according to anyone of claims **1** to **6,** and
- a container comprising a dye.

13. The kit according to claim **12,** comprising at least two containers comprising each independently a composition according to anyone of claims **1** to **6.**

14. Tinted glass comprising a coating, said coating comprising a compound of general formula (I) 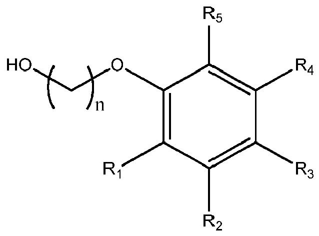 wherein
n is an integer an is ranging from 1 to 6, preferably is equal to 1, 2, 3, 4, 5 or 6, more preferably is equal to 2;
R1, R2, R3, R4 and R5 are each independently selected from the group of substituent comprising hydrogen atoms, halogen atoms, C1-4 alkyl preferably methyl or ethyl, C1-4 alkoxy preferably methoxy or ethoxy, hydroxyl, -O-(CH₂)ₙ-OH wherein n is as described above; preferably R1, R2, R4 and R5 are hydrogen atoms and R3 is -O-(CH₂)ₙ-OH.

15. A lacquer comprising
- at least one hydrolyzed alkoxy silane,
- a promoting agent,
- a blocked isocyanate,
- a solvent.
